# EUROPEAN PATENT SPECIFICATION

(11) **EP 3 671 092 B1**
(45) Date of publication and mention of the grant of the patent: **19.05.2021**
(21) Application number: 18461646.4
(22) Date of filing: 17.12.2018
(51) Int. Cl.: F28D 9/00

(54) **CHARGE AIR COOLER**
LADELUFTKÜHLER
REFROIDISSEUR D'AIR DE SURALIMENTATION

(43) Date of publication of application: 24.06.2020
(73) Proprietor: Valeo Autosystemy SP. Z.O.O., 32-050 Skawina (PL)
(72) Inventor: BUREK, Dariusz, PL 32-050 Skawina (PL); SZOSTEK, Dawid, PL 32-050 Skawina (PL); KANIA, Lukasz, PL 32-050 Skawina (PL)
(74) Representative: Bialkowski, Adam

(56) References cited:
- WO-A1-2015/107882
- US-A1- 2016 003 128
- US-A1- 2017 089 253
- US-B2- 9 038 609

## Description

### FIELD OF THE INVENTION

The invention relates to a charge air cooler.

### BACKGROUND OF THE INVENTION

As commonly known, power produced from naturally aspirated engines depends mostly on its efficiency and displacement. At the sea level, naturally aspirated engine is able to inhale only such amount of air, which is delivered by atmospheric force i.e. 1 bar. Moreover, atmospheric pressure decreases with elevation. However, conventional engines can be easily upgraded in order to increase its performance, thermal efficiency and fuel economy.

To overcome the limitations of an atmospheric pressure, air is pressurized (herein referred to as the "charge air") by mechanical or electric compressors, known as superchargers or turbochargers. In the forced induction engines, power output becomes a function of how much air is delivered to the cylinders. Most commonly used methods to put these compressors into action recapture energy from gas exhaust manifold through an expansion turbine, which pressurizes air delivered to the engine, or relay part of engine's power to motorize a supercharger, usually by a set of pulleys.

Pressurizing the air leads to substantial increase of its temperature. Consequently, the density of the air decreases with temperature, because hot air is less dense than cold air.

Delivering charge air from turbocharger and/or supercharger without cooling it may significantly rise engine's operating temperature, leading to its poor performance or even malfunction. This scenario may be avoided by using charge air cooling system, which lowers the charge air temperature on the path between the turbocharger and/or supercharger and the engine.

Cooling the charge air allows greater air mass to be delivered to the combustion chamber, thus every cycle leads to higher power output and lower fuel consumption. Moreover, thanks to charge air cooling system, durability of an engine is also improved by reducing temperature in the combustion chamber and in the exhaust system. Regarding emissions, cooled charge air provides lower nitrous oxides emissions and less particulate smoke due to higher air density and a convenient air fuel ratio.

One of the ways to supply engine with cool charge air is carried out by mounting various types of charge air coolers which solve most of previously mentioned problems. With respect to cooling medium, charge air coolers can be divided into three types: air-cooled charge air coolers (ACAC), water-cooled charge air coolers (WCAC)and an assemblies that use air conditioning refrigerant for charge air cooling.

In WCAC system used in motor vehicle the coolant fluid is principally the same as in the radiator one. Coolant fluid is circulated to cool the air crossing the charge air cooler. WCAC that uses coolant fluid to cool the charge air can be mounted in different locations of the vehicle only if location provides WCAC efficiency. Arrangement of the coolant circulation routes is crucial for proper functionality of the whole WCAC system. Typical location of ACAC is in the front of the vehicle, usually between front bumper and engine radiator, due to increased demand for air flow coming from vents usually located in the front section of the front bumper. Advantageously, WCAC can be integrated with the air intake manifold or it can be located anywhere within the engine bay as a standalone assembly. In some cases the setup of inlet and outlet of coolant fluid causes problems with respect to limited space in the engine bay. Opposite location of WCACs coolant inlet and outlet requires additional space provided for smooth circulation of coolant, without causing excessive pressure losses. It would be desirable to provide a charge air cooler that has minimal coolant flow losses and requires a little place in the engine bay.

US 2017/0089253 A1 discloses a charge air cooler according to the preamble of claim 1.

### SUMMARY OF THE INVENTION

The object of the invention is a charge air cooler comprising: a first heat exchange section comprising a first inlet manifold and a first outlet manifold connected fluidically by a plurality of stacked first coolant conduits; a second heat exchange section comprising a second inlet manifold and a second outlet manifold connected fluidically by a plurality of stacked second coolant conduits; a coolant inlet connected fluidically with the first inlet manifold and the second inlet manifold; a coolant outlet connected fluidically with the first outlet manifold and the second outlet manifold; wherein the first coolant conduits and the second coolant conduits are distanced within their stacks so that heat exchange between the coolant and the air is enabled, and are both situated between the manifolds of the first heat exchange section and the manifolds of the second heat exchange section.

Preferably, the first coolant conduits and the second coolant conduits are carried out in form of plate assemblies.

Preferably, the plate assembly comprises two plates with shaped channels, wherein the plates face each other back sides so that their shaped channels form together the first coolant conduits and the second coolant conduits, the first and second coolant conduits being separated from each other.

Preferably, the first coolant conduits and the second coolant conduits are fluidically connected by an exchange channels paved between the first and the second coolant conduits.

Preferably, the manifolds are formed by connecting protrusions protruding from the plates.

Preferably, the charge air cooler further comprises a distribution assembly configured to fluidically connect the coolant inlet and the coolant outlet with respective inlet manifolds and outlet manifolds.

Preferably, the distribution assembly is stacked onto a flat plate.

Preferably, the distribution assembly is stacked onto a terminal plate assembly.

Preferably, the distribution assembly assembly comprises a shaped plate with shaped channels for guiding the coolant.

Preferably, the charge air cooler further comprises a first distribution assembly configured to fluidically connect the coolant inlet with respective inlet manifolds and a second distribution assembly configured to fluidically connect the coolant outlet with respective outlet manifolds wherein the first distribution assembly is arranged on the first side of the coolant conduit stacks, and the second distribution assembly is arranged on the second side of the coolant conduit stacks, opposite the first side.

Preferably, at least one of the inlet and the outlet is situated between the inlet and outlet manifolds.

Preferably, both the inlet and the outlet are situated between the inlet and outlet manifolds.

Preferably, at least the inlet or the outlet is situated in the middle between the inlet and outlet manifolds.

Preferably, both the inlet and the outlet are situated in the middle between the inlet and outlet manifolds.

In various embodiments of presented invention, conduits are situated between the manifolds of the first heat exchange section and the manifolds of the second heat exchange section. Owning to the fact that the first coolant conduits and the second coolant conduits are distanced within their stacks, heat exchange between the coolant and the air is improved.

According to an embodiment of circulation conduits, the channels can be in form of the tubular pipes meandering perpendicularly to manifolds, or they can be carried out of the two unitary plate assemblies. Circulation conduits are arranged in a parallel plane to air flow entering the charge air cooler, providing an efficient heat exchange between coolant and air, concurrently without leading to unwanted air pressure drop.

### BRIEF DESCRIPTION OF DRAWINGS

Examples of the invention will be apparent from and described in detail with reference to the accompanying drawings, in which:
Fig. 1 shows a perspective view of a water charge air cooler according to the invention;
Fig. 2A shows a perspective view of a terminal plate assembly;
Fig. 2B shows a perspective view of a plate assembly;
Fig. 2C shows partially exploded side view of the invention;
Fig. 3A shows a perspective view of exemplary embodiment of a distribution assembly;
Fig. 3B shows a perspective view of another exemplary embodiment of a distribution assembly.

### DETAILED DESCRIPTION OF EMBODIMENTS

Embodiments of the invention comprise a water charge air cooler 1 with two separate coolant circulation paths further called sections. Providing more than one path of circulation for the coolant increases efficiency of water charge air cooler, as the heat exchange is facilitated. Moreover, distribution of fluid (coolant) presented in embodiments significantly decreases pressure loses (referred to as the "pressure drop") measured on the outlet of the charge air cooler.

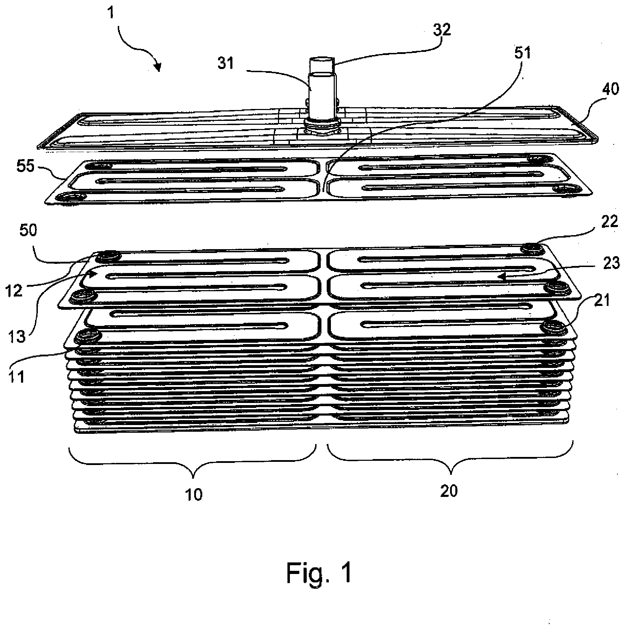

Fig.1 shows a charge air cooler 1 in which the coolant enters through coolant inlet 31. Stream of coolant is then guided by a distribution assembly 40 to the sides of the cooler. The distribution assembly 40 is attached (e.g. brazed) a flat plate 70 and a terminal plate assembly 55. The coolant is directed into a first heat exchange section 10 and a second heat exchange section 20. In this example, heat exchange sections 10 and 20 are situated parallel to each other, thereby providing even coolant distribution. The first heat exchange section 10 comprises a first inlet manifold 11 and a first outlet manifold 12, which are fluidically connected by a plurality of first coolant conduits 13. The first inlet manifold 11 and the first outlet manifold 12 are both located on the side of the heat exchange section 10, thereby creating space for coolant conduits 13. The first coolant conduits 13 can be carried out in form of meandering channels, which ensure longer flow distance for coolant, and consequently better overall heat exchange. The second heat exchange section 20 comprises a second inlet manifold 21 and second outlet manifold 22, which are fluidically connected by plurality of second coolant conduits 23. The second coolant conduits 23 can be carried out in form of meandering channels, which ensure longer flow distance for coolant, and consequently better overall heat exchange. The first coolant conduits 13 and the second coolant conduits 23 are distanced within their stacks so that heat exchange between the coolant and the air is enabled. In this example, fins 60 have not been shown for clarity. Nevertheless, they can be situated in-between the stacks of consecutive coolant conduits to promote heat exchange in a known manner. The first coolant conduits 13 and the second coolant conduits 23 are both situated between the manifolds 11, 12 of the first heat exchange section 10 and the manifolds 21, 22 of the second heat exchange section 20. In other words, the manifolds 21, 22 encompass the first and second coolant conduits 13, 23. This means that the air can flow between the first and the second manifolds 11, 12, 21, 22.

The inlet manifolds 11 and 21 are configured to supply coolant to the first conduits 13 and second conduits 23, whereas the outlet manifolds 12, 22 are configured to collect coolant from first conduits 13 and second conduits 23. The advantage of this solution is a possibility of maintaining water charge air cooler 1 operation even if one of the cooling path gets blocked or clogged up. It reduces a possibility of engine malfunction or overly reduced performance, due to hot air entering the air intake manifold.

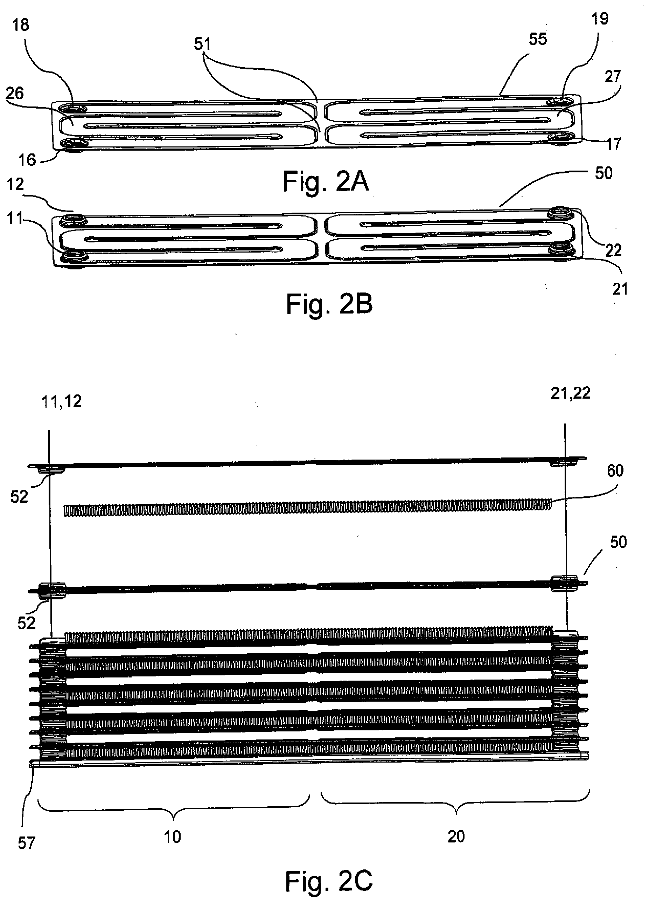

Fig. 2A presents a terminal plate assembly 55. The terminal plate assembly 55 in this example is a single plate comprising shaped meandering channels 26, 27 and plate cavities 16, 17, 18, 19 configured to fluidically connect the channels 26, 27 with manifolds 11, 12, 21, 22.

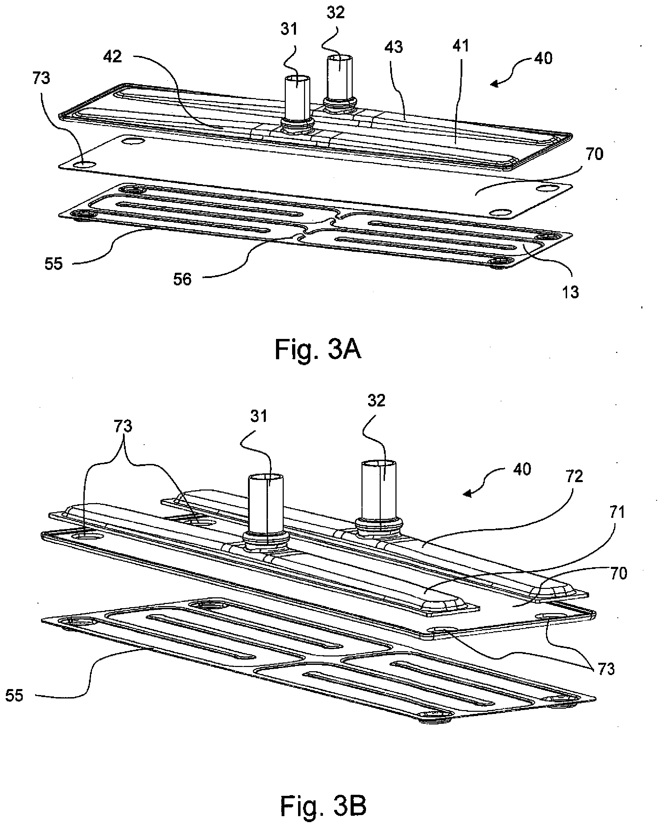

Fig. 2B presents a plate assembly 50. Plate assembly 50 in this example comprises two plates. In particular, two identical plates are facing each other back sides so that their shaped channels form together the first coolant conduits 13 and the second coolant conduits 23. Both the plate assembly 50 and the terminal plate assembly 55 can be carried out in two embodiments. The first embodiment comprises a separation protrusion 51 which separates the first coolant conduits 13 and the second coolant conduits 23, while the second embodiment comprises an exchange channel 56 which is paved preferably along the shortest distance between the first and second coolant conduits 12, 23, so that the first and second coolant conduits 12, 23 are fluidically connected and mixing of coolant fluid between the first and second coolant conduits 12, 23 is enabled. The exchange channel 56 can also be adapted in a terminal plate assembly 55 as presented in the Fig. 3A. Fig. 2C shows a partially exploded side view of the invention. The manifolds 11, 12,21, 22 are formed by stacking consecutive plate assemblies 50. In particular, the manifolds 11, 12, 21, 22 are formed by connecting protrusions 52 protruding from the plates 50. Forming manifolds by stacking plates in this manner requires less material compared to utilization of tubular pipes. One option for connecting the protrusions 52 is to provide them on one side of the plate with a slightly bigger diameter than on the other side of the plate, so that upon turning them by 180 degrees and stacking back - to back, the protrusions with smaller diameters will enter the protrusions with bigger diameter, which should in turn facilitate assembly and brazing process. Fins 60 can be situated between plate assemblies 50 as explained above. The cooler further comprises closing plate 57 as means for closing the manifolds 11, 12, 21, 22. The closing plate 57 can be brazed with last protrusions 52 from the stack of plates assemblies 50 and seal the manifolds 11, 12, 21, 22. The closing plate 57 reinforces the whole structure of the water charge air cooler 1. Other means of sealing the protrusions 52 can also be implemented, e.g. by provision of plugging arrangements, individual closing plates or the last plate without any openings.

The first coolant conduits 13 and the second coolant conduits 23 are connected both mechanically and fluidically with the distribution assembly 40, enabling circulation of the coolant throughout the full volume of the charge air cooler 1.

Fig. 3A, 3B present examples of distribution assembly 40. Distribution assembly 40 can for example be a single formed sheet of metal as shown in Fig. 3A, or assembled by connection of plurality of separate elements - as shown in Fig. 3B. In both embodiments, the distribution assembly 40 is assembled with a flat plate 70 comprising cavities 73.

Fig. 3A presents the distribution assembly 40 comprising a shaped plate 41 with channels 42, 43. The inlet 31 is connected fluidically to the first channel 42, while the outlet 32 is connected fluidically to the second channel 43. The channels 42, 43 are shaped so as to guide the fluid from the inlet 31 to the first and second inlet manifolds 11, 21, and to guide the fluid from the first and second outlet manifolds 12, 22 to the outlet 32. The shaped plate 41 is connected tightly with the flat plate 70 and the terminal plate assembly 55. Terminal plate assembly 55 in this example is a single plate comprising shaped meandering channels. The channels can be produced for example by stamping. Preferably, the terminal plate assembly 55 is identical to those used to produce the plate assemblies 50.

Fig. 3B presents another example of a distribution assembly 40. The cavities are situated so that after assembly, they overlay the respective manifolds 11, 12, 21, 22. The distribution assembly 40 further comprises attached guiding channels 71, 72. The guiding channels connect fluidically the inlet 31 with the inlet manifolds 11, 21, and connect the outlet manifolds 12, 22 with the outlet 32. In this example, intermixing of coolant between the first conduits 13 and the second conduits 23 will not happen. The terminal plate assembly 55 comprises a separation protrusion 51, separating the first conduits 13 from the second conduits 23.However, intermixing of coolant between the first conduits 13 and the second conduits 23 may be enabled if the exchange channel 56 is present in the terminal plate 55 or the plate assemblies 50.

Preferable positioning of coolant inlet 31 and coolant outlet 32 is between manifolds, for example in the middle of plate assemblies 50. Other positions can also be selected, depending on demanded coolant inlet 31 and coolant outlet 32 configuration and position of charge air cooler 1 in the engine bay. What follows from both examples is a flexibility in terms of placement of coolant inlet and outlet. One should take into consideration a fact that presented structure of water charge air cooler 1 allows proper functionality and heat exchange regardless of coolant circulation direction.

Possible embodiments of water charge air cooler with specific distribution assembly 40 gives a lot of flexibility with respect to production process. Further, manifolds are located at the sides of the charge air cooler 1 core, thereby allowing the air flow substantially through the whole volume of charge air cooler 1.

It is also envisaged that the charge air cooler comprises a second distribution assembly 40 instead of the closing plate 57. In such example, the first distribution assembly 40 comprises the inlet for the coolant, and the second distribution assembly 40 comprises the outlet for the coolant, with guiding channels for the coolant in the distribution removed for the missing components. Consequently, the air flow is enabled between the distribution assemblies and between the manifolds at the same time. Such design would increase flexibility in terms of inlet/outlet placement.

Other variations to the disclosed embodiments can be understood and effected by those skilled in the art in practicing the claimed invention, provided they are within the scope of the appended claims.

## Claims

1. A charge air cooler 1 comprising:
- a first heat exchange section 10 comprising a first inlet manifold 11 and a first outlet manifold 12 connected fluidically by a plurality of stacked first coolant conduits 13;
- a second heat exchange section 20 comprising a second inlet manifold 21 and a second outlet manifold 22 connected fluidically by a plurality of stacked second coolant conduits 23;
- a coolant inlet 31 connected fluidically with the first inlet manifold 11 and the second inlet manifold 21;
- a coolant outlet 32 connected fluidically with the first outlet manifold 12 and the second outlet manifold 22;
**characterized in that** the first coolant conduits 13 and the second coolant conduits 23 are distanced within their stacks so that heat exchange between the coolant and the air is enabled, and are both situated between the manifolds 11, 12 of the first heat exchange section 10 and the manifolds 21, 22 of the second heat exchange section 20.

2. A charge air cooler according to claim 1, wherein the first coolant conduits 13 and the second coolant conduits 23 are carried out in form of plate assemblies 50.

3. A charge air cooler according to claim 2, wherein the plate assembly 50 comprises two plates with shaped channels, wherein the plates face each other back sides so that their shaped channels form together the first coolant conduits 13 and the second coolant conduits 23, the first and second coolant conduits 12, 23 being separated from each other.

4. A charge air cooler according to claim 3, wherein the first and second coolant conduits 12, 23 are fluidically connected by an exchange channel (56), paved along the first and second coolant conduits 12, 23.

5. A charge air cooler according to any preceding claim, wherein the manifolds 11,12, 21, 22 are formed by connecting protrusions 52 protruding from the plates 50.

6. A charge air cooler according to any preceding claim, wherein it further comprises a distribution assembly 40 configured to fluidically connect the coolant inlet 31 and the coolant outlet 32 with respective inlet manifolds 11, 21 and outlet manifolds 12, 22.

7. A charge air cooler according to claim 6, wherein the distribution assembly 40 is stacked onto a flat plate 70.

8. A charge air cooler according to claim 6, wherein the distribution assembly 40 is stacked onto a terminal plate assembly 55.

9. A charge air cooler according to claim 7, wherein the distribution assembly 40 comprises a shaped plate 41 with shaped channels 42, 43 for guiding the coolant.

10. A charge air cooler according to claim 6, wherein the distribution assembly 40 comprises guiding channels 71, 72 connecting fluidically the inlet 31 with the inlet manifolds 11, 21, and the outlet manifolds 12, 22 with the outlet 32, through cavities 73 made on the flat plate 70 and overlaying the respective manifolds 11, 12, 21, 22,.

11. A charge air cooler according to any preceding claim, wherein it comprises a first distribution assembly 40 configured to fluidically connect the coolant inlet 31 with respective inlet manifolds 11, 21 and a second distribution assembly 40 configured to fluidically connect the coolant outlet 32 with respective outlet manifolds 12, 22, wherein the first distribution assembly 40 is arranged on the first side of the coolant conduit stacks, and the second distribution assembly 40 is arranged on the second side of the coolant conduit stacks, opposite the first side.

12. A charge air cooler according to any preceding claim, wherein at least one of the inlet 31 and the outlet 32 is situated between the inlet and outlet manifolds 11, 12, 21, 22.

13. A charge air cooler according to any preceding claim, wherein both the inlet 31 and the outlet 32 are situated between the inlet and outlet manifolds 11, 12, 21, 22.

14. A charge air cooler according to any preceding claim, wherein at least the inlet 31 or the outlet 32 is situated in the middle between the inlet and outlet manifolds 11, 12, 21, 22.

15. A charge air cooler according to any preceding claim, wherein both the inlet 31 and the outlet 32 are situated in the middle between the inlet and outlet manifolds 11, 12, 21, 22.

## Patentansprüche

1. Ladeluftkühler 1, umfassend:
- einen ersten Wärmeaustauschabschnitt 10, der einen ersten Einlassstutzen 11 und einen ersten Auslassstutzen 12 umfasst, die durch eine Mehrheit von gestapelten ersten Kühlmittelleitungen 13 fluidisch verbunden sind;
- einen zweiten Wärmeaustauschabschnitt 20, der einen zweiten Einlassstutzen 21 und einen zweiten Auslassstutzen 22 umfasst, die durch eine Mehrheit von gestapelten zweiten Kühlmittelleitungen 23 fluidisch verbunden sind;
- einen Kühlmitteleinlass 31, der mit dem ersten Einlassstutzen 11 und dem zweiten Einlassstutzen 21 fluidisch verbunden ist;
einen Kühlmittelauslass 32, der mit dem ersten Auslassstutzen 12 und dem zweiten Auslassstutzen 22 fluidisch verbunden ist;
**dadurch gekennzeichnet, dass**
die ersten Kühlmittelleitungen 13 und die zweiten Kühlmittelleitungen 23 in ihren Stapeln derart beabstandet sind, dass ein Wärmeaustausch zwischen dem Kühlmittel und der Luft ermöglicht ist, und sich beide zwischen den Stutzen 11, 12 des ersten Wärmeaustauschabschnitts 10 und den Stutzen 21, 22 des zweiten Wärmeaustauschabschnitts 20 befinden.

2. Ladeluftkühler nach Anspruch 1, wobei die ersten Kühlmittelleitungen 13 und die zweiten Kühlmittelleitungen 23 in Form von Plattenanordnungen 50 ausgeführt sind.

3. Ladeluftkühler nach Anspruch 2, wobei die Plattenanordnung 50 zwei Platten mit geformten Kanälen umfasst, wobei die Rückseiten der Platten einander derart zugewandt sind, so dass deren geformte Kanäle zusammen die ersten Kühlmittelleitungen 13 und die zweiten Kühlmittelleitungen 23 bilden, wobei die ersten und die zweiten Kühlmittelleitungen 12, 23 voneinander getrennt sind.

4. Ladeluftkühler nach Anspruch 3, wobei die ersten und die zweiten Kühlmittelleitungen 12, 23 durch einen Austauschkanal (56) fluidisch verbunden sind, der entlang der ersten und zweiten Kühlmittelleitungen 12, 23 befestigt ist.

5. Ladeluftkühler nach einem vorhergehenden Anspruch, wobei die Stutzen 11, 12, 21, 22 durch Verbinden von Vorsprüngen 52 gebildet sind, die aus den Platten 50 hervorstehen.

6. Ladeluftkühler nach einem vorhergehenden Anspruch, wobei er ferner eine Verteilungsanordnung 40 umfasst, die dafür gestaltet ist, den Kühlmitteleinlass 31 und den Kühlmittelauslass 32 mit entsprechenden Einlassstutzen 11, 21 und Auslassstutzen 12, 22 fluidisch zu verbinden.

7. Ladeluftkühler nach Anspruch 6, wobei die Verteilungsanordnung 40 auf eine flache Platte 70 gestapelt ist.

8. Ladeluftkühler nach Anspruch 6, wobei die Verteilungsanordnung 40 auf eine Endplattenanordnung 55 gestapelt ist.

9. Ladeluftkühler nach Anspruch 7, wobei die Verteilungsanordnung 40 eine geformte Platte 41 mit geformten Kanälen 42, 43 zum Führen des Kühlmittels umfasst.

10. Ladeluftkühler nach Anspruch 6, wobei die Verteilungsanordnung 40 Führungskanäle 71, 72 umfasst, die durch Hohlräume 73, die auf der flachen Platte 70 hergestellt sind und die entsprechenden Stutzen 11, 12, 21, 22 überlagern, den Einlass 31 mit den Einlassstutzen 11, 21 und die Auslassstutzen 12, 22 mit dem Auslass 32 fluidisch verbinden.

11. Ladeluftkühler nach einem vorhergehenden Anspruch, wobei er eine erste Verteilungsanordnung 40 umfasst, die dafür gestaltet ist, den Kühlmitteleinlass 31 mit entsprechenden Einlassstutzen 11, 21 fluidisch zu verbinden, und eine zweite Verteilungsanordnung 40, die dafür gestaltet ist, den Kühlmittelauslass 32 mit entsprechenden Auslassstutzen 12, 22 fluidisch zu verbinden, wobei die erste Verteilungsanordnung 40 an der ersten Seite der Kühlmittelleitungsstapel angeordnet ist und die zweite Verteilungsanordnung 40 an der zweiten Seite der Kühlmittelleitungsstapel, gegenüber der ersten Seite, angeordnet ist.

12. Ladeluftkühler nach einem vorhergehenden Anspruch, wobei sich mindestens eines von dem Einlass 31 und dem Auslass 32 zwischen den Einlass- und den Auslassstutzen 11, 12, 21, 22 befindet.

13. Ladeluftkühler nach einem vorhergehenden Anspruch, wobei sich sowohl der Einlass 31 als auch der Auslass 32 zwischen den Einlass- und den Auslassstutzen 11, 12, 21, 22 befinden.

14. Ladeluftkühler nach einem vorhergehenden Anspruch, wobei sich mindestens der Einlass 31 oder der Auslass 32 in der Mitte zwischen den Einlass- und den Auslassstutzen 11, 12, 21, 22 befindet.

15. Ladeluftkühler nach einem vorhergehenden Anspruch, wobei sich sowohl der Einlass 31 als auch der Auslass in der Mitte zwischen den Einlass- und den Auslassstutzen 11, 12, 21, 22 befinden.

## Revendications

1. Refroidisseur d'air de suralimentation 1, comprenant :
- une première section d'échange de chaleur 10 comprenant une première tubulure d'entrée 11 et une première tubulure de sortie 12 raccordées de façon fluidique par une pluralité de premiers conduits de liquide de refroidissement empilés 13 ;
- une seconde section d'échange de chaleur 20 comprenant une seconde tubulure d'entrée 21 et une seconde tubulure de sortie 22 raccordées de façon fluidique par une pluralité de seconds conduits de liquide de refroidissement empilés 23 ;
- une entrée de liquide de refroidissement 31 raccordée de façon fluidique à la première tubulure d'entrée 11 et la seconde tubulure d'entrée 21 ;
- une sortie de liquide de refroidissement 32 raccordée de façon fluidique à la première tubulure de sortie 12 et la seconde tubulure de sortie 22 ;
**caractérisé en ce que**
les premiers conduits de liquide de refroidissement 13 et les seconds conduits de liquide de refroidissement 23 sont éloignés à l'intérieur de leurs empilements pour que l'échange de chaleur entre le liquide de refroidissement et l'air soit permis, et ils sont tous situés entre les tubulures 11, 12 de la première section d'échange de chaleur 10 et les tubulures 21, 22 de la seconde section d'échange de chaleur 20.

2. Refroidisseur d'air de suralimentation selon la revendication 1, dans lequel les premiers conduits de liquide de refroidissement 13 et les seconds conduits de liquide de refroidissement 23 sont réalisés sous forme d'ensembles de plaques 50.

3. Refroidisseur d'air de suralimentation selon la revendication 2, dans lequel l'ensemble de plaques 50 comprend deux plaques avec des canaux façonnés, dans lequel les plaques se font face dos à dos pour que leurs canaux façonnés forment ensemble les premiers conduits de liquide de refroidissement 13 et les seconds conduits de liquide de refroidissement 23, les premiers et seconds conduits de liquide de refroidissement 12, 23 étant séparés les uns des autres.

4. Refroidisseur d'air de suralimentation selon la revendication 3, dans lequel les premiers et seconds conduits de liquide de refroidissement 12, 23 sont raccordés de façon fluidique par un canal d'échange (56), placé le long des premiers et seconds conduits de liquide de refroidissement 12, 23.

5. Refroidisseur d'air de suralimentation selon une quelconque revendication précédente, dans lequel les tubulures 11, 12, 21, 22 sont formées en raccordant des protubérances 52 faisant saillie à partir des plaques 50.

6. Refroidisseur d'air de suralimentation selon une quelconque revendication précédente, dans lequel il comprend en outre un ensemble de distribution 40 configuré pour raccorder de façon fluidique l'entrée de liquide de refroidissement 31 et la sortie de liquide de refroidissement 32 à des tubulures d'entrée 11, 21 et tubulures de sortie 12, 22 respectives.

7. Refroidisseur d'air de suralimentation selon la revendication 6, dans lequel l'ensemble de distribution 40 est empilé sur une plaque plate 70.

8. Refroidisseur d'air de suralimentation selon la revendication 6, dans lequel l'ensemble de distribution 40 est empilé sur un ensemble de plaques terminal 55.

9. Refroidisseur d'air de suralimentation selon la revendication 7, dans lequel l'ensemble de distribution 40 comprend une plaque façonnée 41 avec des canaux façonnés 42, 43 pour guider le liquide de refroidissement.

10. Refroidisseur d'air de suralimentation selon la revendication 6, dans lequel l'ensemble de distribution 40 comprend des canaux de guidage 71, 72 raccordant de façon fluidique l'entrée 31 aux tubulures d'entrée 11, 21, et les tubulures de sortie 12, 22 à la sortie 32, par l'intermédiaire de cavités 73 faites sur la plaque plate 70 et recouvrant les tubulures respectives 11, 12, 21, 22.

11. Refroidisseur d'air de suralimentation selon une quelconque revendication précédente, dans lequel il comprend un premier ensemble de distribution 40 configuré pour raccorder de façon fluidique l'entrée de liquide de refroidissement 31 à des tubulures d'entrée respectives 11, 21 et un second ensemble de distribution 40 configuré pour raccorder de façon fluidique la sortie de liquide de refroidissement 32 à des tubulures de sortie respectives 12, 22, dans lequel le premier ensemble de distribution 40 est agencé sur le premier côté des empilements de conduits de liquide de refroidissement, et le second ensemble de distribution 40 est agencé sur le second côté des empilements de conduits de liquide de refroidissement, opposé au premier côté.

12. Refroidisseur d'air de suralimentation selon une quelconque revendication précédente, dans lequel au moins une de l'entrée 31 et de la sortie 32 est située entre les tubulures d'entrée et de sortie 11, 12, 21, 22.

13. Refroidisseur d'air de suralimentation selon une quelconque revendication précédente, dans lequel l'entrée 31 et la sortie 32 sont toutes les deux situées entre les tubulures d'entrée et de sortie 11, 12, 21, 22.

14. Refroidisseur d'air de suralimentation selon une quelconque revendication précédente, dans lequel au moins l'entrée 31 ou la sortie 32 est située au milieu entre les tubulures d'entrée et de sortie 11, 12, 21, 22.

15. Refroidisseur d'air de suralimentation selon une quelconque revendication précédente, dans lequel l'entrée 31 et la sortie 32 sont toutes les deux situées au milieu entre les tubulures d'entrée et de sortie 11, 12, 21, 22.
